(19)

Europäisches Patentamt

European Patent Office

Office européen des brevets

(11) **EP 4 661 438 A1**

(12) **EUROPEAN PATENT APPLICATION**
published in accordance with Art. 153(4) EPC

(43) Date of publication:
**10.12.2025  Bulletin 2025/50**

(21) Application number: **24756323.2**

(22) Date of filing: **09.02.2024**

(51) International Patent Classification (IPC):
**H04W 4/029** (2018.01)

(52) Cooperative Patent Classification (CPC):
**H04W 4/02; H04W 4/029**

(86) International application number:
**PCT/CN2024/077095**

(87) International publication number:
**WO 2024/169951 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023  CN 202310165627**

(71) Applicant: **Huawei Technologies Co., Ltd.
Shenzhen, Guangdong 518129 (CN)**

(72) Inventors:
• **ZHANG, Jingwei
  Shenzhen, Guangdong 518129 (CN)**
• **CHEN, Ying
  Shenzhen, Guangdong 518129 (CN)**
• **QIAO, Yunfei
  Shenzhen, Guangdong 518129 (CN)**
• **TIE, Xiaolei
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **POSITIONING METHOD AND APPARATUS**

(57)     This application provides a positioning method and an apparatus. The method includes: A first communication apparatus sends a first time difference to a positioning server. The first time difference is determined based on a second time difference and first information, a value range of the first time difference is a first interval, the second time difference indicates a time difference between receiving time at which the first communication apparatus receives an $i^{th}$ first time domain resource in a first time unit and sending time at which the first communication apparatus sends a $j^{th}$ second time domain resource in a second time unit, and the first information corresponds to first duration. The first time difference is sent to the positioning server, so that the positioning server can perform verification on a position of the first communication apparatus based on the first time difference and the first information.

FIG. 6

## Description

This application claims priority to Chinese Patent Application No. 202310165627.1, filed with the China National Intellectual Property Administration on February 16, 2023 and entitled "POSITIONING METHOD AND APPARATUS", which is incorporated herein by reference in its entirety.

## TECHNICAL FIELD

This application relates to the field of communication technologies, and more specifically, to a positioning method and an apparatus.

## BACKGROUND

Compared with a conventional mobile communication system, satellite communication has wider coverage, supports asymmetric transmission links and independence of communication costs and a transmission distance, and can overcome natural geographical obstacles such as oceans, deserts, and mountains. In satellite communication, a satellite cell usually covers a large area, and may cross a border to cover a plurality of countries and regions. When a satellite provides communication services such as disaster warning, an emergency call, and charging in compliance with laws and regulations of a country or a region, a position of a terminal device usually needs to be known.

In existing satellite communication, positioning of a terrestrial terminal device is usually implemented by using a dedicated positioning satellite, and the positioning satellite is mainly used by the terminal device to position itself. The terminal device reports its position information to a network side. However, the position information reported by the terrestrial terminal device may be tampered with, or the reported position information is affected by interference and has a large error. Therefore, how to implement positioning of the terrestrial terminal device by the network side or verification on the position information reported by the terrestrial terminal device is a problem that needs to be resolved.

## SUMMARY

This application provides a positioning method and an apparatus, to implement positioning of or position verification on a terminal device in a satellite communication scenario.

According to a first aspect, a positioning method is provided. The method may be performed by a first communication apparatus. The first communication apparatus may be a terminal device, or may be a chip or a circuit configured in the terminal device. This is not limited in this application. The following uses an example in which the method is performed by the first communication apparatus for description.

The method includes: A first communication apparatus sends a first time difference to a positioning server, where the first time difference is determined based on a second time difference and first information, and a value range of the first time difference is a first interval, and the second time difference indicates a time difference between receiving time at which the first communication apparatus receives an $i^{th}$ first time domain resource in a first time unit and sending time at which the first communication apparatus sends a $j^{th}$ second time domain resource in a second time unit, and the first information corresponds to first duration.

Based on the foregoing technical solution, the first time difference is sent to the positioning server, so that the positioning server can perform verification on a position of the first communication apparatus based on the first time difference and the first duration. The first time difference is determined based on the second time difference and the first information, and the value range of the first time difference is the first interval.

With reference to the first aspect, in some implementations of the first aspect, the second time difference indicates the time difference between the receiving time at which the first communication apparatus receives the $i^{th}$ first time domain resource in the first time unit and the sending time at which the first communication apparatus sends the $j^{th}$ second time domain resource in the second time unit, where i=j. In other words, the second time difference may be a timing advance (timing advance, TA) of the first communication apparatus.

With reference to the first aspect, in some implementations of the first aspect, the first information includes any one of the following: a first parameter, where the first parameter is used to determine a timing advance TA of the first communication apparatus; an identifier of a timing advance group (timing advance group, TAG) to which the first communication apparatus belongs, where the identifier of the TAG corresponds to a first timing advance TA; a scheduling offset $K_{offset}$ of the first communication apparatus, where the scheduling offset $K_{offset}$ is used to adjust the sending time of the second time domain resource; and a sum of the timing advance TA of the first communication apparatus and a third time difference, where the third time difference is a time difference between receiving time at which a second communication apparatus receives the $j^{th}$ second time domain resource and sending time at which the second communication apparatus sends a $j^{th}$ first time domain resource.

With reference to the first aspect, in some implementations of the first aspect, the third time difference includes a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

With reference to the first aspect, in some implementations of the first aspect, the first information includes any one of the following: a first value, where the first value is obtained by rounding down or rounding up the second time difference; and a quantity of each type of time domain resources in at least one type of time domain resources, where a sum of the first time difference and a sum of products of quantities of types of time domain resources and lengths of the types of the time domain resources is the second time difference.

With reference to the first aspect, in some implementations of the first aspect, the first communication apparatus sends the first information to the positioning server.

With reference to the first aspect, in some implementations of the first aspect, the first communication apparatus sends the $j^{th}$ second time domain resource to the second communication apparatus, where the $j^{th}$ second time domain resource is used by the second communication apparatus to determine a sixth time difference, the sixth time difference is determined based on a seventh time difference and second information, and a value range of the sixth time difference is a second interval, and the seventh time difference indicates a time difference between the receiving time at which the second communication apparatus receives the $j^{th}$ second time domain resource and sending time at which the second communication apparatus sends the $i^{th}$ first time domain resource, and the second information corresponds to second duration.

With reference to the first aspect, in some implementations of the first aspect, the second information includes any one of the following: a quantity $N_1$ of a first type of time domain resources, where a value of $N_1$ is determined based on a third time difference and a length of the first type of time domain resource, and the third time difference is a time difference between receiving time at which a second communication apparatus receives the $j^{th}$ second time domain resource and sending time at which the second communication apparatus sends a $j^{th}$ first time domain resource; a second value, where the second value is obtained by rounding down or rounding up the seventh time difference; and a quantity of each type of time domain resources in at least one type of time domain resources, where a sum of the first time difference and a sum of products of quantities of types of time domain resources and lengths of the types of the time domain resources is the second time difference.

With reference to the first aspect, in some implementations of the first aspect, the third time difference includes a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

With reference to the first aspect, in some implementations of the first aspect, the first communication apparatus receives indication information from the positioning server, where the indication information indicates to send the first time difference.

According to a second aspect, a communication method is provided. The method may be performed by a second communication apparatus. The second communication apparatus may be a network device, or may be a chip or a circuit configured in the network device. This is not limited in this application. The following uses an example in which the method is performed by the second communication apparatus for description.

The method includes: A second communication apparatus receives a first time difference from a first communication apparatus, where the first time difference is determined based on a second time difference and first information, and a value range of the first time difference is a first interval; and the second communication apparatus sends the first time difference to a positioning server, where the second time difference indicates a time difference between receiving time at which the first communication apparatus receives an $i^{th}$ first time domain resource in a first time unit and sending time at which the first communication apparatus sends a $j^{th}$ second time domain resource in a second time unit, and the first information corresponds to first duration.

Based on the foregoing technical solution, the second communication apparatus sends the first time difference of the first communication apparatus to the positioning server, so that the positioning server can perform verification on a position of the first communication apparatus based on the first time difference and the first information. The first time difference is determined based on the second time difference and the first information, and the value range of the first time difference is the first interval.

With reference to the second aspect, in some implementations of the second aspect, the second time difference indicates the time difference between the receiving time at which the first communication apparatus receives the $i^{th}$ first time domain resource in the first time unit and the sending time at which the first communication apparatus sends the $j^{th}$ second time domain resource in the second time unit, where i=j. In other words, the second time difference may be a timing advance TA of the first communication apparatus.

With reference to the second aspect, in some implementations of the second aspect, the first information includes any one of the following: a first parameter, where the first parameter is used to determine a timing advance TA of the first communication apparatus; an identifier of a timing advance group TAG to which the first communication apparatus belongs, where the identifier of the TAG corresponds to a first timing advance TA; a scheduling offset $K_{offset}$ of the first communication apparatus, where the scheduling offset $K_{offset}$ is used to adjust the sending time of the second time domain resource; and a sum of the timing advance TA of the first communication apparatus and a third time difference, where the third time difference is a time difference between receiving time at which the second communication apparatus receives the $j^{th}$ second time domain resource and sending time at which the second communication apparatus sends a $j^{th}$ first time domain resource.

With reference to the second aspect, in some implementations of the second aspect, the third time difference includes a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

With reference to the second aspect, in some implementations of the second aspect, the first information includes any one of the following: a first value, where the first value is obtained by rounding down or rounding up the second time difference; and a quantity of each type of time domain resources in at least one type of time domain resources, where a sum of the first time difference and a sum of products of quantities of types of time domain resources and lengths of the types of the time domain resources is the second time difference.

With reference to the second aspect, in some implementations of the second aspect, the second communication apparatus receives the first information from the first communication apparatus; and the second communication apparatus sends the first information to the positioning server.

With reference to the second aspect, in some implementations of the second aspect, the second communication apparatus sends a sixth time difference to the positioning server, where the sixth time difference is determined based on a seventh time difference and second information, and a value range of the sixth time difference is a second interval, and the seventh time difference indicates a time difference between the receiving time at which the second communication apparatus receives the $j^{th}$ second time domain resource and sending time at which the second communication apparatus sends the $i^{th}$ first time domain resource, and the second information corresponds to second duration.

With reference to the second aspect, in some implementations of the second aspect, the second information includes any one of the following: a quantity $N_1$ of a first type of time domain resources, where a value of $N_1$ is determined based on a third time difference and a length of the first type of time domain resource, and the third time difference is a time difference between receiving time at which the second communication apparatus receives the $j^{th}$ second time domain resource and sending time at which the second communication apparatus sends a $j^{th}$ first time domain resource; a second value, where the second value is obtained by rounding down or rounding up the seventh time difference; and a quantity of each type of time domain resources in at least one type of time domain resources, where a sum of the sixth time difference and a sum of products of quantities of types of time domain resources and lengths of the types of the time domain resources is the seventh time difference.

With reference to the second aspect, in some implementations of the second aspect, the third time difference includes a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

With reference to the second aspect, in some implementations of the second aspect, the second communication apparatus sends the second information to the positioning server.

According to a third aspect, a communication method is provided. The method may be performed by a positioning server.

The method includes: A positioning server receives a first time difference, where the first time difference is determined based on a second time difference and first information, a value range of the first time difference is a first interval, the second time difference indicates a time difference between receiving time at which a first communication apparatus receives an $i^{th}$ first time domain resource in a first time unit and sending time at which the first communication apparatus sends a $j^{th}$ second time domain resource in a second time unit, and the first information corresponds to first duration; and the positioning server performs verification on a position of the first communication apparatus based on the first time difference and the first information.

Based on the foregoing technical solution, by receiving the first time difference of the first communication apparatus, the positioning server can perform verification on the position of the first communication apparatus based on the first time difference and the first information. The first time difference is determined based on the second time difference and the first information, and the value range of the first time difference is the first interval.

With reference to the third aspect, in some implementations of the third aspect, the second time difference indicates the time difference between the receiving time at which the first communication apparatus receives the $i^{th}$ first time domain resource in the first time unit and the sending time at which the first communication apparatus sends the $j^{th}$ second time domain resource in the second time unit, where i=j. In other words, the second time difference may be a timing advance TA of the first communication apparatus.

With reference to the third aspect, in some implementations of the third aspect, the first information includes any one of the following: a first parameter, where the first parameter is used to determine a timing advance TA of the first communication apparatus; an identifier of a timing advance group TAG to which the first communication apparatus belongs, where the identifier of the TAG corresponds to a first timing advance TA; a scheduling offset $K_{offset}$ of the first communication apparatus, where the scheduling offset $K_{offset}$ is used to adjust the sending time of the second time domain resource; and a sum of the timing advance TA of the first communication apparatus and a third time difference, where the third time difference is a time difference between receiving time at which the second communication apparatus receives the $j^{th}$ second time domain resource and sending time at which the second communication apparatus sends a $j^{th}$ first time domain resource.

With reference to the third aspect, in some implementations of the third aspect, the third time difference includes a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

With reference to the third aspect, in some implementations of the third aspect, the first information includes any one of the following: a first value, where the first value is obtained by rounding down or rounding up the second time difference; and a quantity of each type of time domain resources in at least one type of time domain resources, where a sum of the first time difference and a sum of products of quantities of types of time domain resources and lengths of the types of the time domain resources is the second time difference.

With reference to the third aspect, in some implementations of the third aspect, before performing verification on the position of the first communication apparatus based on the first time difference and the first information, the positioning server receives the first information from the first communication apparatus.

With reference to the third aspect, in some implementations of the third aspect, the positioning server receives a sixth time difference from the second communication apparatus, where the sixth time difference is determined based on a seventh time difference and second information, and a value range of the sixth time difference is a second interval, and the seventh time difference indicates a time difference between the receiving time at which the second communication apparatus receives the $j^{th}$ second time domain resource and sending time at which the second communication apparatus sends the $i^{th}$ first time domain resource, and the second information corresponds to second duration.

With reference to the third aspect, in some implementations of the third aspect, the positioning server performs verification on the position of the first communication apparatus based on the first time difference, the first information, the second time difference, and the second information.

With reference to the third aspect, in some implementations of the third aspect, the second information is any one of the following: a quantity $N_1$ of a first type of time domain resources, where a value of $N_1$ is determined based on a third time difference and a length of the first type of time domain resource, and the third time difference is a time difference between receiving time at which the second communication apparatus receives the $j^{th}$ second time domain resource and sending time at which the second communication apparatus sends a $j^{th}$ first time domain resource; a second value, where the second value is obtained by rounding down or rounding up the seventh time difference; and a quantity of each type of time domain resources in at least one type of time domain resources, where a sum of the sixth time difference and a sum of products of quantities of types of time domain resources and lengths of the types of the time domain resources is the seventh time difference.

With reference to the third aspect, in some implementations of the third aspect, the third time difference includes a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

With reference to the third aspect, in some implementations of the third aspect, before performing verification on the position of the first communication apparatus based on the first time difference and the first information, the positioning server receives the second information from the second communication apparatus.

With reference to the third aspect, in some implementations of the third aspect, before receiving the first time difference, the positioning server sends indication information to the first communication apparatus, where the indication information indicates to send the first time difference.

According to a fourth aspect, a communication apparatus is provided. The apparatus includes a transceiver unit. The transceiver unit is configured to send a first time difference to a positioning server, where the first time difference is determined based on a second time difference and first information, and a value range of the first time difference is a first interval, and the second time difference indicates a time difference between receiving time at which the communication apparatus receives an $i^{th}$ first time domain resource in a first time unit and sending time at which the communication apparatus sends a $j^{th}$ second time domain resource in a second time unit, and the first information corresponds to first duration.

With reference to the fourth aspect, in some implementations of the fourth aspect, the second time difference indicates the time difference between the receiving time at which the first communication apparatus receives the $i^{th}$ first time domain resource in the first time unit and the sending time at which the first communication apparatus sends the $j^{th}$ second time domain resource in the second time unit, where i=j. In other words, the second time difference may be a timing advance TA of the first communication apparatus.

With reference to the fourth aspect, in some implementations of the fourth aspect, the first information includes any one of the following: a first parameter, where the first parameter is used to determine a timing advance TA of the communication apparatus; an identifier of a timing advance group TAG to which the communication apparatus belongs, where the identifier of the TAG corresponds to a first timing advance TA; a scheduling offset $K_{offset}$ of the communication apparatus, where the scheduling offset $K_{offset}$ is used to adjust the sending time of the second time domain resource; and a sum of the timing advance TA of the communication apparatus and a third time difference, where the third time difference is a time difference between receiving time at which a second communication apparatus receives the $j^{th}$ second time domain resource and sending time at which the second communication apparatus sends a $j^{th}$ first time domain resource.

With reference to the fourth aspect, in some implementations of the fourth aspect, the third time difference includes a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

With reference to the fourth aspect, in some implementations of the fourth aspect, the first information includes any one of the following: a first value, where the first value is obtained by rounding down or rounding up the second time difference; and a quantity of each type of time domain resources in at least one type of time domain resources, where a sum of the first time difference and a sum of products of quantities of types of time domain resources and lengths of the types of the time domain resources is the second time difference.

With reference to the fourth aspect, in some implementations of the fourth aspect, the transceiver unit is further configured to send the first information to the positioning server.

With reference to the fourth aspect, in some implementations of the fourth aspect, the transceiver unit is further configured to send the $j^{th}$ second time domain resource to the second communication apparatus, where the $j^{th}$ second time domain resource is used by the second communication apparatus to determine a sixth time difference, the sixth time difference is determined based on a seventh time difference and second information, and a value range of the sixth time difference is a second interval, and the seventh time difference indicates a time difference between the receiving time at which the second communication apparatus receives the $j^{th}$ second time domain resource and sending time at which the second communication apparatus sends the $i^{th}$ first time domain resource, and the second information corresponds to second duration.

With reference to the fourth aspect, in some implementations of the fourth aspect, the second information includes any one of the following: a quantity $N_1$ of a first type of time domain resources, where a value of $N_1$ is determined based on a third time difference and a length of the first type of time domain resource, and the third time difference is a time difference between receiving time at which a second communication apparatus receives the $j^{th}$ second time domain resource and sending time at which the second communication apparatus sends a $j^{th}$ first time domain resource; a second value, where the second value is obtained by rounding down or rounding up the seventh time difference; and a quantity of each type of time domain resources in at least one type of time domain resources, where a sum of the first time difference and a sum of products of quantities of types of time domain resources and lengths of the types of the time domain resources is the second time difference.

With reference to the fourth aspect, in some implementations of the fourth aspect, the third time difference further includes a fifth time difference, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

With reference to the fourth aspect, in some implementations of the fourth aspect, the transceiver unit is further configured to receive indication information from the positioning server, where the indication information indicates to send the first time difference.

According to a fifth aspect, a communication apparatus is provided. The apparatus includes a transceiver unit. The transceiver unit is configured to receive a first time difference from a first communication apparatus, where the first time difference is determined based on a second time difference and first information, and a value range of the first time difference is a first interval; and the transceiver unit is further configured to send the first time difference to a positioning server, where the second time difference indicates a time difference between receiving time at which the first communication apparatus receives an $i^{th}$ first time domain resource in a first time unit and sending time at which the first communication apparatus sends a $j^{th}$ second time domain resource in a second time unit, and the first information corresponds to first duration.

With reference to the fifth aspect, in some implementations of the fifth aspect, the second time difference indicates the time difference between the receiving time at which the first communication apparatus receives the $i^{th}$ first time domain resource in the first time unit and the sending time at which the first communication apparatus sends the $j^{th}$ second time domain resource in the second time unit, where i=j. In other words, the second time difference may be a timing advance TA of the first communication apparatus.

With reference to the fifth aspect, in some implementations of the fifth aspect, the first information includes any one of the following: a first parameter, where the first parameter is used to determine a timing advance TA of the first communication apparatus; an identifier of a timing advance group TAG to which the first communication apparatus belongs, where the identifier of the TAG corresponds to a first timing advance TA; a scheduling offset $K_{offset}$ of the first communication apparatus, where the scheduling offset $K_{offset}$ is used to adjust the sending time of the second time domain resource; and a sum of the timing advance TA of the first communication apparatus and a third time difference, where the third time difference is a time difference between receiving time at which the communication apparatus receives the $j^{th}$ second time domain resource and sending time at which the second communication apparatus sends a $j^{th}$ first time domain resource.

With reference to the fifth aspect, in some implementations of the fifth aspect, the third time difference includes a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

With reference to the fifth aspect, in some implementations of the fifth aspect, the first information includes any one of the following: a first value, where the first value is obtained by rounding down or rounding up the second time difference; and a quantity of each type of time domain resources in at least one type of time domain resources, where a sum of the first time difference and a sum of products of quantities of types of time domain resources and lengths of the types of the time domain resources is the second time difference.

With reference to the fifth aspect, in some implementations of the fifth aspect, the transceiver unit is further configured to receive the first information from the first communication apparatus; and the second communication apparatus sends the first information to the positioning server.

With reference to the fifth aspect, in some implementations of the fifth aspect, the second communication apparatus sends a sixth time difference to the positioning server, where the sixth time difference is determined based on a seventh time difference and second information, and a value range of the sixth time difference is a second interval, and the seventh time difference indicates a time difference between the receiving time at which the second communication apparatus receives the $j^{th}$ second time domain resource and sending time at which the second communication apparatus sends the $i^{th}$ first time domain resource, and the second information corresponds to second duration.

With reference to the fifth aspect, in some implementations of the fifth aspect, the second information includes any one of the following: a quantity $N_1$ of a first type of time domain resources, where a value of $N_1$ is determined based on a third time difference and a length of the first type of time domain resource, and the third time difference is a time difference between receiving time at which the second communication apparatus receives the $j^{th}$ second time domain resource and sending time at which the second communication apparatus sends a $j^{th}$ first time domain resource; a second value, where the second value is obtained by rounding down or rounding up the seventh time difference; and a quantity of each type of time domain resources in at least one type of time domain resources, where a sum of the sixth time difference and a sum of products of quantities of types of time domain resources and lengths of the types of the time domain resources is the seventh time difference.

With reference to the fifth aspect, in some implementations of the fifth aspect, the third time difference includes a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

With reference to the fifth aspect, in some implementations of the fifth aspect, the transceiver unit is further configured to send the second information to the positioning server.

According to a sixth aspect, a communication apparatus is provided. The apparatus includes a transceiver unit and a processing unit. The transceiver unit is configured to receive a first time difference, where the first time difference is determined based on a second time difference and first information, a value range of the first time difference is a first interval, the second time difference indicates a time difference between receiving time at which a first communication apparatus receives an $i^{th}$ first time domain resource in a first time unit and sending time at which the first communication apparatus sends a $j^{th}$ second time domain resource in a second time unit, and the first information corresponds to first duration; and the processing unit is configured to perform verification on a position of the first communication apparatus based on the first time difference and the first information.

With reference to the sixth aspect, in some implementations of the sixth aspect, the second time difference indicates the time difference between the receiving time at which the first communication apparatus receives the $i^{th}$ first time domain resource in the first time unit and the sending time at which the first communication apparatus sends the $j^{th}$ second time domain resource in the second time unit, where i=j. In other words, the second time difference may be a timing advance TA of the first communication apparatus.

With reference to the sixth aspect, in some implementations of the sixth aspect, the first information includes any one of the following: a first parameter, where the first parameter is used to determine a timing advance TA of the first communication apparatus; an identifier of a timing advance group TAG to which the first communication apparatus belongs, where the identifier of the TAG corresponds to a first timing advance TA; a scheduling offset $K_{offset}$ of the first communication apparatus, where the scheduling offset $K_{offset}$ is used to adjust the sending time of the second time domain resource; and a sum of the timing advance TA of the first communication apparatus and a third time difference, where the third time difference is a time difference between receiving time at which a second communication apparatus receives the $j^{th}$ second time domain resource and sending time at which the second communication apparatus sends a $j^{th}$ first time domain resource.

With reference to the sixth aspect, in some implementations of the sixth aspect, the third time difference includes a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

With reference to the sixth aspect, in some implementations of the sixth aspect, the first information includes any one of the following: a first value, where the first value is obtained by rounding down or rounding up the second time difference; and a quantity of each type of time domain resources in at least one type of time domain resources, where a sum of the first time difference and a sum of products of quantities of types of time domain resources and lengths of the types of the time domain resources is the second time difference.

With reference to the sixth aspect, in some implementations of the sixth aspect, the transceiver unit is further configured to receive the first information from the first communication apparatus.

With reference to the sixth aspect, in some implementations of the sixth aspect, the transceiver unit is further configured to receive a sixth time difference from the second communication apparatus, where the sixth time difference is determined based on a seventh time difference and second information, and a value range of the sixth time difference is a second interval, and the seventh time difference indicates a time difference between the receiving time at which the second communication apparatus receives the $j^{th}$ second time domain resource and sending time at which the second communication apparatus sends the $i^{th}$ first time domain resource, and the second information corresponds to second duration.

With reference to the sixth aspect, in some implementations of the sixth aspect, the processing unit is specifically configured to perform verification on the position of the first communication apparatus based on the first time difference, the first information, the second time difference, and the second information.

With reference to the sixth aspect, in some implementations of the sixth aspect, the second information is any one of the following: a quantity $N_1$ of a first type of time domain resources, where a value of $N_1$ is determined based on a third time difference and a length of the first type of time domain resource, and the third time difference is a time difference between receiving time at which the second communication apparatus receives the $j^{th}$ second time domain resource and sending time at which the second communication apparatus sends a $j^{th}$ first time domain resource; a second value, where the second value is obtained by rounding down or rounding up the seventh time difference; and a quantity of each type of time domain resources in at least one type of time domain resources, where a sum of the sixth time difference and a sum of products of quantities of types of time domain resources and lengths of the types of the time domain resources is the seventh time difference.

With reference to the sixth aspect, in some implementations of the sixth aspect, the third time difference includes a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the j$^{th}$ second time domain resource and the sending time of the k$^{th}$ first time domain resource, and the sending time of the k$^{th}$ first time domain resource is closest to the receiving time of the j$^{th}$ second time domain resource.

With reference to the sixth aspect, in some implementations of the sixth aspect, the transceiver unit is further configured to receive the second information from the second communication apparatus.

With reference to the sixth aspect, in some implementations of the sixth aspect, the transceiver unit is further configured to send indication information to the first communication apparatus, where the indication information indicates to send the first time difference.

According to a seventh aspect, a communication apparatus is provided, including a processor. The processor is coupled to a memory, and may be configured to execute instructions in the memory, to implement the method according to the first aspect and any one of the possible implementations of the first aspect. Optionally, the communication apparatus further includes the memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip configured in the terminal device. When the communication apparatus is the chip configured in the terminal device, the communication interface may be an input/output interface.

Optionally, the transceiver may be a transceiver circuit. Optionally, the input/output interface may be an input/output circuit.

According to an eighth aspect, a communication apparatus is provided, including a processor. The processor is coupled to a memory, and may be configured to execute instructions in the memory, to implement the method according to the second aspect and any one of the possible implementations of the second aspect. Optionally, the communication apparatus further includes the memory. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip configured in the network device. When the communication apparatus is the chip configured in the network device, the communication interface may be an input/output interface.

Optionally, the transceiver may be a transceiver circuit. Optionally, the input/output interface may be an input/output circuit.

According to a ninth aspect, a communication apparatus is provided, including a processor. The processor is coupled to a memory, and may be configured to execute instructions in the memory, to implement the method according to the third aspect and any one of the possible implementations of the third aspect. Optionally, the communication apparatus further includes the memory. Optionally, the communication apparatus further includes a communication interface, and the processor is coupled to the communication interface.

In an implementation, the communication apparatus is a positioning server. When the communication apparatus is the positioning server, the communication interface may be a transceiver or an input/output interface.

In another implementation, the communication apparatus is a chip configured in the positioning server. When the communication apparatus is the chip configured in the positioning server, the communication interface may be an input/output interface.

According to a tenth aspect, a processor is provided, including an input circuit, an output circuit, and a processing circuit. The processing circuit is configured to: receive a signal through the input circuit, and transmit a signal through the output circuit, so that the processor is enabled to perform the method according to any one of the possible implementations of the first aspect to the third aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eleventh aspect, a processing apparatus is provided, including a processor and a memory. The processor is configured to: read instructions stored in the memory, receive a signal via a receiver, and transmit a signal via a transmitter, to perform the method according to any one of the possible implementations of the first aspect to the third aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into one chip, or may be separately disposed on different chips. A type of the memory and a manner in which the memory and the processor are disposed are not limited in this embodiment of this application.

It should be understood that, a related data exchange process like sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus according to the eleventh aspect may be one or more chips. The processor in the processing apparatus may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a twelfth aspect, a computer program product is provided. The computer program product includes a computer program (which may alternatively be referred to as code or instructions). When the computer program runs, a computer is enabled to perform the method according to any one of the possible implementations of the first aspect to the third aspect.

According to a thirteenth aspect, a computer-readable storage medium is provided. The computer-readable storage medium stores a computer program (which may alternatively be referred to as code or instructions). When the computer program runs on a computer, the computer is enabled to perform the method according to any one of the possible implementations of the first aspect to the third aspect.

According to a fourteenth aspect, a communication system is provided, including at least one of the foregoing first communication apparatus, second communication apparatus, and positioning server.

## BRIEF DESCRIPTION OF DRAWINGS

FIG. 1 is a diagram of an architecture of satellite communication;
FIG. 2 is a diagram of a communication system to which an embodiment of this application is applicable;
FIG. 3 is a diagram of transmission round trip time between UE and a gNB;
FIG. 4 is a diagram of an application scenario of a positioning method;
FIG. 5 is a diagram of an application scenario of another positioning method;
FIG. 6 is a schematic flowchart of a communication method 600 according to an embodiment of this application;
FIG. 7 is a block diagram of a communication apparatus 700 according to an embodiment of this application;
FIG. 8 is a block diagram of a communication apparatus 800 according to an embodiment of this application; and
FIG. 9 is a block diagram of a chip system 900 according to an embodiment of this application.

## DESCRIPTION OF EMBODIMENTS

The following describes technical solutions in embodiments in this application with reference to accompanying drawings.

The technical solutions in embodiments of this application may be applied to various communication systems, for example, a global system for mobile communications (global system for mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a machine-to-machine (machine-to-machine, M2M) communication system, a non-terrestrial network (non-terrestrial network, NTN) system, a 5th generation (the 5th Generation, 5G) mobile communication system, a new radio (New Radio, NR) system, or a future wireless communication system. The NTN system may also be referred to as a satellite communication system. In addition, the non-terrestrial communication system may further include a high altitude platform station (high altitude platform station, HAPS) communication system.

The NTN system is a communication network in which an air platform or a space platform is used as a relay node of a transmission device, or a base station. The air platform or the space platform includes but is not limited to an uncrewed aerial vehicle, a hot air balloon, an airplane, a satellite, and the like.

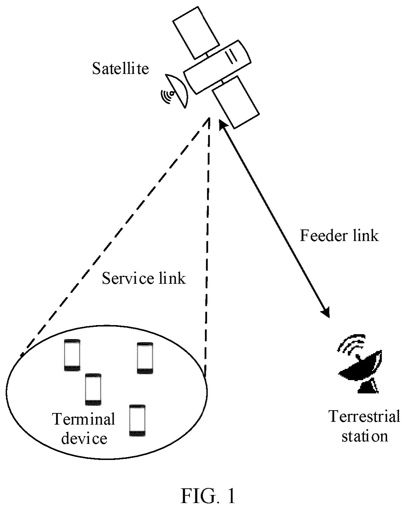

FIG. 1 is a diagram of an architecture of NTN communication. As shown in FIG. 1, satellite communication is used as an example. In this scenario, a terrestrial station (gateway, GW), a satellite, user equipment (user equipment, UE), and the like may be included. A terrestrial station in an NTN system can provide a function similar to that of a gateway in a terrestrial communication system, for example, establishing a connection to UE and communicating with a server. For distinguishing from the terrestrial communication system, the gateway is referred to as the terrestrial station herein. The terrestrial station also has functions such as monitoring and fault query for a satellite, and packet switching and interface protocol conversion for communication data. The terrestrial station is connected to a core network. A link between the terrestrial station and the satellite is referred to as a feeder link (feeder link), and a link between the satellite and the user equipment is referred to as a service link (service link). Usually, the satellite may have two operating modes, which are respectively a transparent (transparent) transmission mode and a regenerative mode. In the transparent transmission mode, data of a terminal device usually reaches the terrestrial station through the satellite, and then reaches a destination through the terrestrial station. Usually, because the satellite is far away from the terminal device on the ground, for example, more than 1,000 kilometers away, a transmission delay is large when the satellite transmits data in this operating mode. In the regenerative mode, the satellite may perform filtering, frequency amplification, and signal amplification on a wireless signal, and may also perform signal demodulation, decoding, data packet switching or routing, and encoding and modulation. Therefore, the satellite operating in the regenerative mode basically has some or all functions of a base station in a cellular network.

It should be understood that the user equipment (user equipment, UE) in this embodiment of this application may be referred to as a terminal device, and is a device that provides voice/data connectivity for a user, for example, a handheld device or a vehicle-mounted device with a wireless connection function. Currently, some terminals may be, for example, a mobile phone (mobile phone), a tablet computer (pad), a computer with a wireless transceiver function (for example, a notebook computer or a palmtop computer), a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a future evolved PLMN, or the like.

The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is a hardware device, and implements a powerful function through software support, data exchange, and cloud interaction. In a broad sense, wearable intelligent devices include a full-featured and large-size device that can implement complete and partial functions without depending on a smartphone, for example, a smart watch or smart glasses, and a device that focuses on only one type of application function and needs to work with another device like a smartphone, for example, various smart bands or smart jewelry for physical sign monitoring.

In addition, the terminal device may alternatively be a terminal device in an internet of things (internet of things, IoT) system. The IoT is an important part of future information technology development. A main technical feature of the IoT is connecting a thing to a network by using a communication technology, to implement an intelligent network for interconnection between a person and a machine or between things. An IoT technology may implement massive connections, deep coverage, and terminal power saving by using, for example, a narrowband (narrowband, NB) technology.

It should be understood that an example of an NTN communication scenario is described in FIG. 1. In embodiments of this application, an example in which a communication apparatus is a satellite is used. However, the communication apparatus in embodiments of this application is not limited thereto. Alternatively, the communication apparatus in this application may be a terrestrial station, a high altitude platform station, an uncrewed aerial vehicle in NTN communication, a terminal device that undertakes a base station function in device-to-device (Device-to-Device, D2D) communication, or the like.

In addition, the communication apparatus in embodiments of this application may be a device configured to communicate with a terminal device. The communication apparatus in embodiments of this application may also be referred to as a network device. The communication apparatus may be a base transceiver station (Base Transceiver Station, BTS) in a global system for mobile communications (Global System for Mobile Communications, GSM) system or a code division multiple access (Code Division Multiple Access, CDMA) system, may be a NodeB (NodeB, NB) in a wideband code division multiple access (Wideband Code Division Multiple Access, WCDMA) system, may be an evolved NodeB (Evolved NodeB, eNB or eNodeB) in an LTE system, or may be a radio controller in a cloud radio access network (Cloud Radio Access Network, CRAN) scenario. Alternatively, the communication apparatus may be a relay station, an access point, a vehicle-mounted device, a wearable device, a communication apparatus in a 5G network, a communication apparatus in a future evolved PLMN network, or the like. This is not limited in embodiments of this application.

It should be understood that the communication apparatus in the wireless communication system may be any device with a wireless transceiver function. The device includes but is not limited to a base station controller (Base Station Controller, BSC), a base transceiver station (Base Transceiver Station, BTS), or the like; may be one antenna panel or a group of antenna panels (including a plurality of antenna panels) of a base station in a 5G system or the like; or may be a satellite or the like.

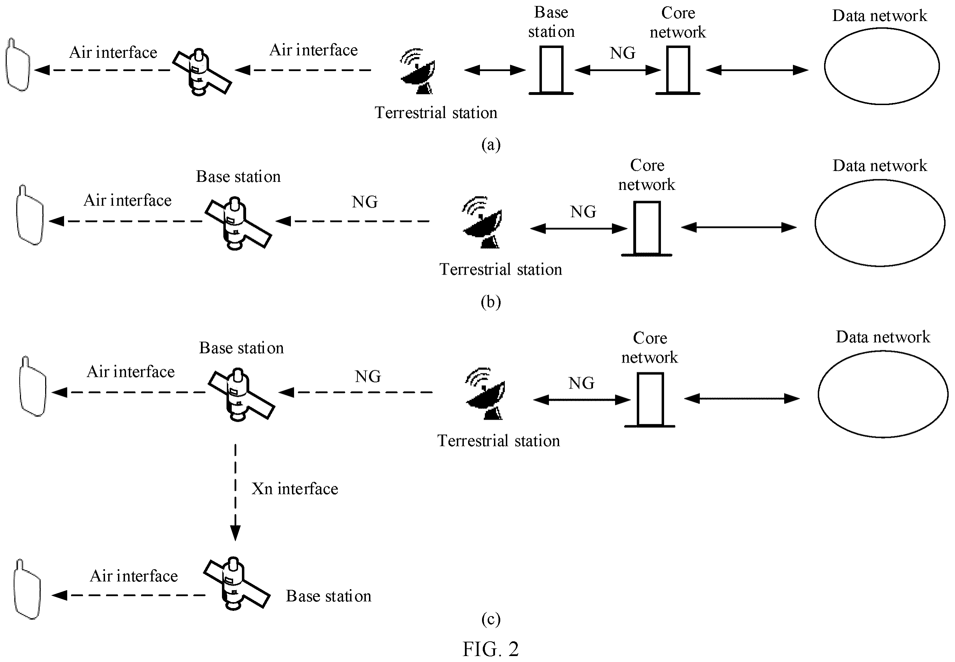

The solutions provided in this application may be applied to a satellite communication scope. For example, members of the 3GPP integrate satellite communication and 5G technologies. FIG. 2 shows a network application architecture of the technology. A terrestrial mobile terminal device UE accesses a network over air interfaces, where the air interfaces may be various types of air interfaces, for example, a 5G air interface. As shown in (a) in FIG. 2, a base station may be deployed on the ground, and connected to a terrestrial station that communicates with a satellite. Alternatively, as shown in (b) in FIG. 2, the base station may be deployed on the satellite. The satellite is connected to the terrestrial station over a wireless link, the terrestrial station and a terrestrial base station are connected to a core network over a wired or wireless link, and a wireless link may exist between satellites, as shown in (c) in FIG. 2. If the satellite has only a transparent transmission and forwarding function (that is, a corresponding base station is deployed on the ground), only the transparent transmission and forwarding function is implemented between the satellites; or if base stations or some functions of the base stations are deployed on satellites, signaling exchange and user data transmission between the base stations may be completed between the satellites. Network elements and interfaces between the network elements in the figure are described as follows.

Terminal device: Refer to the foregoing descriptions of the terminal device. The terminal device may access a satellite network over an air interface and initiate services such as calls and internet access.

Base station: mainly provides a wireless access service, schedules a wireless resource to an accessed terminal device, and provides a reliable wireless transmission protocol, a data encryption protocol, and the like.

Core network: provides services such as user access control, mobility management, session management, user security authentication, and charging. The core network includes a plurality of functional units, and the functional units may be classified into control-plane functional entities and data-plane functional entities. An access and mobility management function (AMF) is responsible for user access management, security authentication, and mobility management. A user plane function (UPF) is responsible for managing functions such as user plane data transmission and traffic statistics collection.

Terrestrial station: is responsible for forwarding signaling and service data between the satellite base station and the 5G core network.

Air interface: is a wireless link between a terminal device and a base station.

Xn interface: is an interface between 5G base stations, and is mainly used for signaling exchange, for example, handover.

NG interface: is an interface between a 5G base station and a 5G core network, and is mainly used for exchange of signaling such as non-access stratum (non-access stratum, NAS) signaling of the core network and service data of a user.

There are a plurality of existing methods for positioning a terminal device in a terrestrial network, for example, positioning the terminal device by using a delay, a delay difference, a receiving angle, and the like of a reference signal. The following describes several common positioning methods.

1. Downlink time difference of arrival (downlink time difference of arrival, DL-TDOA)

A downlink DL signal used for DL-TDOA may be a positioning reference signal (positioning reference signal, PRS). UE measures a receive time difference of PRSs from different transmit-receive points (transmit-receive points, TRPs) or gNBs and reports the receive time difference to a positioning server. The positioning server then calculates a position of the UE by using a known position of the TRP or gNB and the receive time difference of the PRSs.

2. Uplink time difference of arrival (uplink time difference of arrival, UL-TDOA)

In a UL-TDOA positioning technology, UE sends a sounding reference signal (sounding reference signaling, SRS). Correspondingly, a plurality of TRPs receive the SRS, and report relative time differences of arrival to a positioning server. The positioning server then estimates a position of the UE based on the measured time difference of arrival of the reference signal and a known position of the TRP.

3. Multi-round trip time (multi-round trip time, multi-RTT)

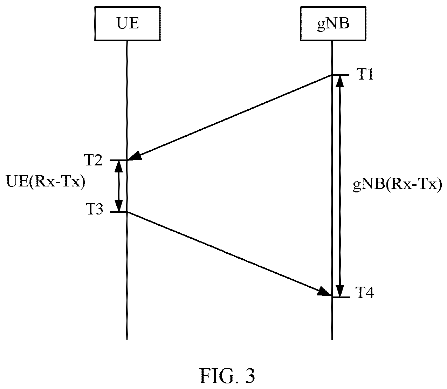

The multi-round trip time is transmission round trip time (round trip time, RTT) that is between UE and a plurality of TRPs and that is estimated based on a time interval between sending and receiving signals. As shown in FIG. 3, a base station determines that a time difference between sending a PRS and receiving an SRS is T4-T1=gNB(Tx-Rx), and the UE determines that a time difference between receiving a PRS and sending an SRS is T3-T2=UE(Rx-Tx) time difference. Therefore, the RTT between the UE and the TRP is approximately equal to gNB(Tx-Rx)-UE(Rx-Tx). Measurement is performed a plurality of times, and a measurement result is sent to a positioning server, so that the positioning server can determine a position of the UE based on the RTT.

In the time difference of arrival TDOA positioning technology, synchronization between a user and a base station is required. However, in the multi-RTT, UE and a plurality of TRPs or gNBs send reference signals to each other, and a position of the UE may be determined based on data such as a time difference between receiving and sending the signals by the UE and a time difference between receiving and sending the signals by the gNB. The positioning method is slightly affected by synchronization precision between base stations.

The following describes a method for calculating RTT between UE and a gNB in a terrestrial network.

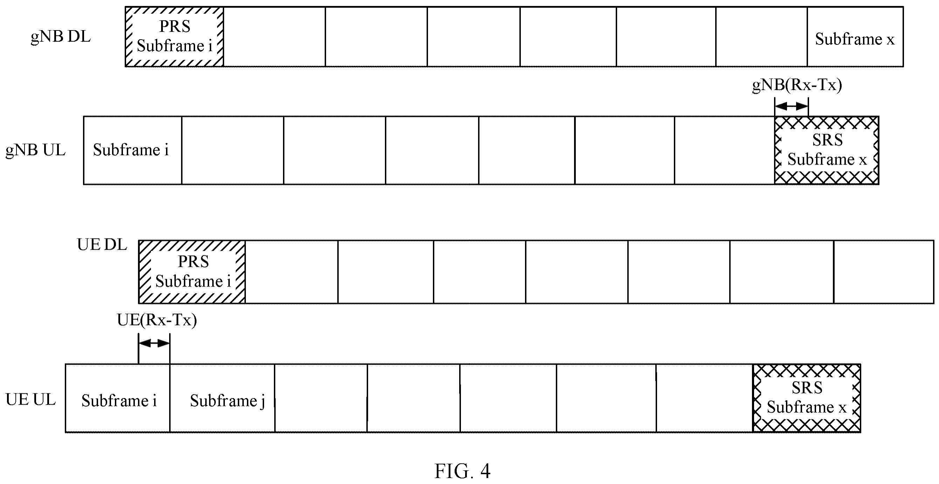

As shown in FIG. 4, a gNB sends a downlink DL subframe i to UE, and the DL subframe i may carry a PRS. The UE needs to send an uplink UL subframe i in advance based on a boundary of the DL subframe i, where duration for which the UE sends the uplink UL subframe i in advance is a timing advance (timing advance, TA). In this way, the DL subframe i and the UL subframe i are aligned on the gNB side. In an ideal case, the TA may be twice a delay between the UE and the gNB, that is, RTT between the UE and the gNB. If the TA of the UE has a deviation, the gNB needs to determine an actual TA of the UE based on a receive-transmit time difference of the UE and a receive-transmit time difference of the gNB. The receive-transmit time difference UE(Rx-Tx) of the UE may be a time difference between a moment at which the UE receives the DL subframe i and a moment at which the UE sends a UL subframe j, where the subframe j is closest to the received DL subframe i in terms of time. The receive-transmit time difference gNB(Rx-Tx) of the gNB may be a time difference between a moment at which the gNB receives a UL subframe x and a moment at which the gNB sends a DL subframe y, where the DL subframe y is closest to the received UL subframe x in terms of time, and the UL subframe x may carry a sounding reference signal (sounding reference signal, SRS). The actual TA of the UE may be a difference between the TA of the UE and |gNB(Rx-Tx)|, where the TA of the UE is a difference between a length of one subframe and UE(Rx-Tx), or is UE(Rx-Tx).

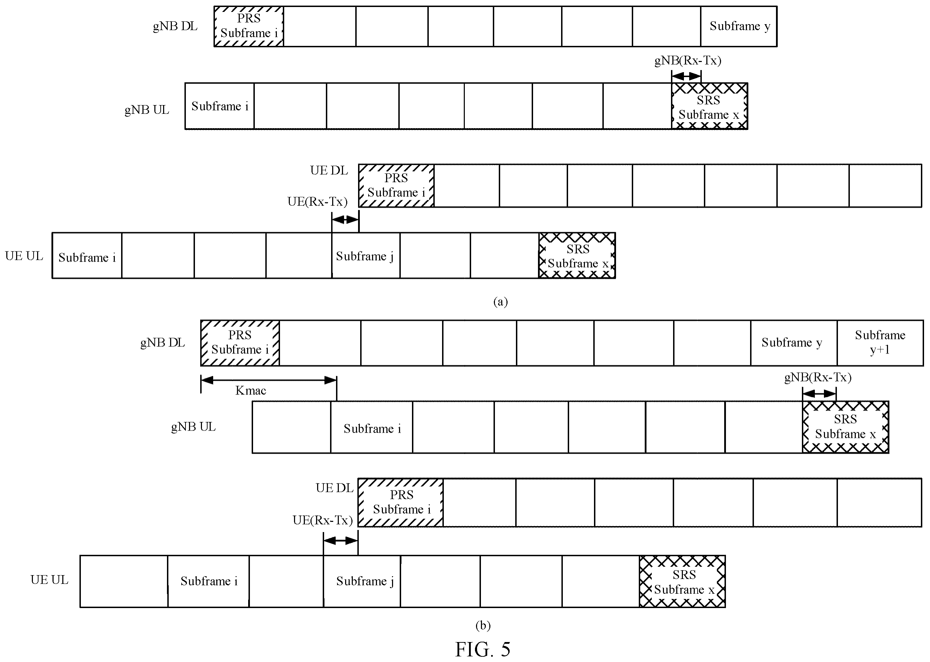

Usually, the timing advance of the UE in the terrestrial network does not exceed one subframe, and changes slightly. Therefore, the RTT between the UE and the gNB may be determined based on the foregoing method, and is used by the network side to perform verification on a position of the UE. However, in a satellite communication scenario, the timing advance of the UE is large and changes in real time. For example, as shown in FIG. 5, a timing advance of UE exceeds a length of one subframe, that is, receive-transmit time differences of the UE and a gNB in a satellite communication scenario may be large. Reporting of the receive-transmit time differences of the UE and the gNB in the satellite communication scenario based on the existing solution may cause a waste of resources. In the scenario shown in (a) in FIG. 5, a synchronization point is in the gNB (Kmac=0), and in the scenario shown in (b) in FIG. 5, a synchronization point is not in the gNB (Kmac≠0), where Kmac is a scheduling offset provided by a network side.

The following describes a method for reporting the receive-transmit time differences of the UE and the gNB.

Based on the existing solution, a receive-transmit time difference gNB(Rx-Tx) on a base station side is defined as $T_{gNB-RX}-T_{gNB-TX}$, where $T_{gNB-RX}$ is first-path time at which a transmit-receive point (transmit-receive point, TRP) receives a subframe #i including an SRS. $T_{gNB-TX}$ is time at which the TRP sends a downlink subframe #j, where the downlink subframe #j is closest, in terms of time, to the time at which the subframe #i from UE is received. A method for reporting gNB(Rx-Tx) is as follows.

A reporting interval of the receive-transmit time difference gNB(Rx-Tx) on the base station side is from -985024Tc to 985024Tc. A reporting granularity is evenly distributed in the entire reporting interval, and a size of the granularity is defined as $T=Tc*2^k$, where k is selected from a set {0, 1, 2, 3, 4, 5}, and Tc indicates an interval between sampling points, and may be 0.509 ns.

For example, when a value of k is 0, a measured quantity value of gNB(Rx-Tx) may belong to 1,970,050 subintervals, and the gNB may report, to a network side, a reported value corresponding to a subinterval to which the measured quantity value of gNB(Rx-Tx) belongs, so that the network side can learn of the receive-transmit time difference gNB(Rx-Tx) on the base station side.

Table 1

| Reported value (Reported Value) | Measured quantity value (Measured Quantity Value) | Unit (unit) |
|---|---|---|
| Rx-Tx_0000 | -985024>Rx-Tx | Tc |
| Rx-Tx_0001 | -985024≤Rx-Tx<-985023 | Tc |
| Rx-Tx_0002 | -985023≤Rx-Tx<-985022 | Tc |
| ... | ... | ... |
| Rx-Tx_985023 | -2≤Rx-Tx<-1 | Tc |
| Rx-Tx_985024 | -1≤Rx-Tx≤0 | Tc |
| Rx-Tx_985025 | 0<Rx-Tx≤1 | Tc |
| Rx-Tx_985026 | 1<Rx-Tx≤2 | Tc |
| Rx-Tx_985027 | 2<Rx-Tx≤3 | Tc |
| ... | ... | ... |
| Rx-Tx_1970048 | 985023<Rx-Tx≤985024 | Tc |
| Rx-Tx_1970049 | 985024<Rx-Tx | Tc |

A receive-transmit time difference UE(Rx-Tx) on a terminal side is defined as $T_{UE-RX}-T_{UE-TX}$, where $T_{UE-RX}$ is first-path time at which a downlink subframe #i from a TRP is received. $T_{UE-TX}$ is time at which the UE sends an uplink subframe #j, where the uplink subframe #j is closest, in terms of time, to the subframe #i received from the TRP. A method for reporting UE(Rx-Tx) is as follows.

A reporting interval of the receive-transmit time difference UE(Rx-Tx) on the terminal side is from -985024Tc to 985024Tc. A reporting granularity is evenly distributed in the entire reporting interval, and a size of the granularity is defined as $T=Tc*2^k$. For a value of k, refer to the existing standard. Tc indicates an interval between sampling points, and may be 0.509 ns.

Due to an orbital altitude of the satellite, the receive-transmit time differences of the UE and the gNB in the satellite communication scenario may be large. However, an existing interval range of gNB(Rx-Tx) and UE(Rx-Tx) is approximately -0.5 ms to 0.5 ms, and cannot meet a requirement for reporting the receive-transmit time differences of the UE and the gNB in the satellite communication scenario. Therefore, how to report the receive-transmit time differences of the UE and the gNB in the satellite communication scenario, so that based on the receive-transmit time differences of the UE and the gNB, the network side positions the terrestrial terminal device or performs verification on position information reported by the terrestrial terminal device is a problem that needs to be resolved.

In view of this, embodiments of this application provide a positioning method, which may be used for positioning of or position verification on a terminal device in a satellite communication scenario.

For ease of understanding embodiments of this application, the following descriptions are provided.

In embodiments of this application, "at least two" means two or more. A term "and/or" describes an association relationship between associated objects, and indicates that three relationships may exist. For example, A and/or B may indicate the following three cases: A exists alone, both A and B exist, and B exists alone, where A and B may be singular or plural. In text descriptions of this application, a character "/" usually indicates an "or" relationship between the associated objects.

It may be understood that various numbers in embodiments of this application are merely used for distinguishing for ease of description and are not used to limit the scope of embodiments of this application. Sequence numbers of the foregoing processes do not mean execution sequences. The execution sequences of the processes should be determined based on functions and internal logic of the processes, and should not constitute any limitation on implementation processes of embodiments of this application.

In embodiments of this application, "first", "second", and various numbers are merely used for distinguishing for ease of description, and are not intended to limit the scope of embodiments of this application. For example, the terms are used to distinguish between different indication information.

In embodiments of this application, "indicate" may include "directly indicate" and "indirectly indicate". When a piece of indication information is described as indicating A, the indication information may directly indicate A or indirectly indicate A, but it does not indicate that the indication information definitely carries A.

In addition, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

In embodiments of this application, descriptions such as "when...", "in a case of...", and "if" all mean that a device performs corresponding processing in an objective case, but do not constitute a limitation on time, do not require that the device has a determining action during implementation, and do not mean another limitation either.

In embodiments of this application, "indication information" and "configuration information" may be an explicit indication, to be specific, a direct indication by using signaling, or an indication obtained based on a parameter indicated by signaling in combination with another rule or another parameter or obtained through deduction; or may be an implicit indication, to be specific, an indication obtained according to a rule or based on a relationship or another parameter or obtained through deduction. This is not specifically limited in this application.

It should be understood that the "reference signal used for positioning" in this application is collectively denoted as a "reference signal." However, this does not mean that the "reference signal" includes only a reference signal dedicated for positioning (positioning reference signal, PRS). Optionally, the "reference signal used for positioning" may further include a sounding reference signal (sounding reference signal, SRS), a demodulation reference signal (demodulation reference signal, DMRS), a tracking reference signal (tracking reference signal, TRS), a channel state information reference signal (channel state information reference signal, CSI-RS), and the like.

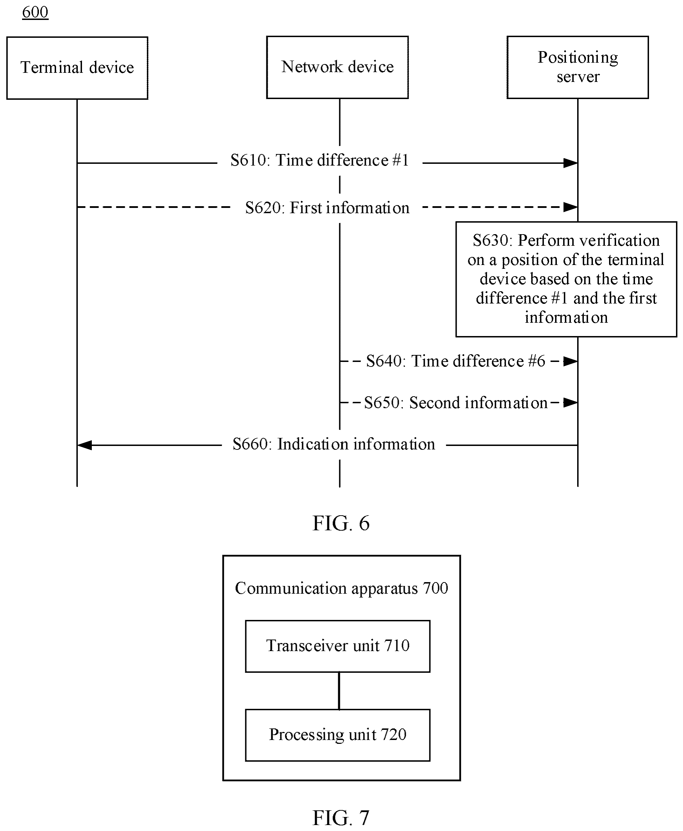

FIG. 6 is a schematic flowchart of an example of a communication method 600 according to an embodiment of this application. The method 600 includes at least the following several steps.

S610: A terminal device (an example of a first communication apparatus) sends a time difference #1 (an example of a first time difference) to a positioning server. Correspondingly, the positioning server receives the time difference #1 from the terminal device.

The time difference #1 is determined based on a time difference #2 and first information, and a value range of the time difference #1 is a first interval.

The time difference #2 may be used to determine a receive-transmit time difference of the terminal device in a satellite communication scenario.

For example, the time difference #2 may indicate a time difference between receiving time at which the terminal device receives an $i^{th}$ first time domain resource in a first time unit and sending time at which the terminal device sends a $j^{th}$ second time domain resource in a second time unit; or the time difference #2 indicates a time difference between receiving time at which the terminal device receives an $i^{th}$ first time domain resource in a first time unit and receiving time at which the terminal device receives a $p^{th}$ first time domain resource in the first time unit; or the time difference #2 indicates a time difference between sending time at which the terminal device sends a $j^{th}$ second time domain resource in a second time unit and sending time at which the terminal device sends a $q^{th}$ second time domain resource in the second time unit. A value of the time difference #2 may not belong to the first interval.

Optionally, the time difference #2 may further indicate a time difference between receiving time at which the terminal device receives an $i^{th}$ first time domain resource in a first time unit and sending time at which the terminal device sends an $i^{th}$ second time domain resource in a second time unit. In other words, the time difference #2 may indicate a TA of the terminal device.

The first time unit includes N first time domain resources, the second time unit includes N second time domain resources, N is a positive integer, and i, j, p, and q are any values from l to N respectively.

The first information corresponds to duration #1 (an example of first duration), or the duration #1 may be determined based on the first information. A value of the duration #1 may not belong to the first interval.

For example, the first interval may be a reporting interval #1 corresponding to the receive-transmit time difference of the terminal device defined in the existing standard. Alternatively, the first interval may be less than the reporting interval #1. For example, the reporting interval #1 is -985024Tc to 985024Tc, where Tc indicates an interval between sampling points, and may be 0.509 ns. The first interval may be -985024Tc to 985024Tc or -MTc to MTc, where M<985024.

That the time difference #1 is determined based on the time difference #2 and the first information may be that the time difference #2 is a sum of the time difference #1 and the duration #1. For example, the duration #1 corresponding to the first information may be subtracted from the time difference #2, to determine the time difference #1.

In this application, the time unit may be a frame, a subframe, a slot, or the like; and the time domain resource may be a subframe, a slot, a symbol, or the like. This is not limited. The following uses an example in which the time unit is a frame and the time domain resource is a subframe for description.

For the first information, refer to any one of the following examples.

Example #1

The first information may include a value of a first parameter, the first parameter is used to determine a timing advance TA of the first communication apparatus, and the first parameter may include at least one of $N_{TA}$, $N_{TA\text{-}offset}$, a common timing advance $N_{TA,adj}^{common}$, and $N_{TA,adj}^{UE}$.

In the satellite communication scenario, the receive-transmit time difference of the terminal device may include the TA of the terminal device, and the TA may be determined according to Formula (1).

$$TA = (N_{TA} + N_{TA-offset} + N_{TA,adj}^{common} + N_{TA,adj}^{UE})T_c \quad (1)$$

Herein, $N_{TA}$, $N_{TA\text{-}offset}$, and $N_{TA,adj}^{common}$ are configured by a network side, and $N_{TA,adj}^{UE}$ may be determined by the terminal device. For a specific process of determining by the terminal device, refer to the existing related descriptions.

For example, that the terminal device may determine the time difference #1 based on the time difference #2 and the value of the first parameter may be that the value of the first parameter multiplied by Tc is subtracted from the time difference #2, to obtain the time difference #1. In other words, the duration #1 may be the value of the first parameter multiplied by Tc.

Example #2

The first information may include an identifier of a timing advance group TAG (for example, a TAG #1) to which the terminal device belongs, where the identifier of the TAG corresponds to a timing advance #1 (an example of a first timing advance).

In the satellite communication scenario, the TA of the terminal device may be configured by a network side. For example, the network device may configure TAs of the terminal device that belong to different TAGs, so that the terminal device can determine the TA of the terminal device based on the identifier of the TAG to which the terminal device belongs.

For example, that the terminal device determines the time difference #1 based on duration corresponding to the TAG #1 and the time difference #2 may be that the duration corresponding to the TAG #1 is subtracted from the time difference #2, to obtain the time difference #1. In other words, the duration #1 may be the duration corresponding to the TAG #1.

Example #3

The first information includes a scheduling offset $K_{offset}$ of the terminal device, where the scheduling offset $K_{offset}$ is used to adjust the sending time at which the terminal device sends the second time domain resource.

In the satellite communication scenario, a value of $K_{offset}$ is configured by a network side. For example, $K_{offset}=K_{cell,offset}=K_{UE,offset}$, where $K_{cell,offset}$ is provided by CellSpecificKoffset signaling, and $K_{UE,offset}$ may be provided by a Differential Koffset MAC CE command (command).

For example, that the terminal device determines the time difference #1 based on $K_{offset}$ and the time difference #2 may be that $K_{offset}$ is subtracted from the time difference #2, to obtain the time difference #1. In other words, the duration #1 may be duration corresponding to $K_{offset}$.

Example #4:

The first information may be a sum of the timing advance TA of the terminal device and a time difference #3 (an example of a third time difference), where the time difference #3 is a value of Kmac, and Kmac is a scheduling offset provided by a network side.

The time difference #3 may be a time difference between receiving time at which a second communication apparatus receives the j$^{th}$ second time domain resource and sending time at which the second communication apparatus sends a j$^{th}$ first time domain resource.

Optionally, the time difference #3 includes a time difference #4 and a time difference #5, the time difference #4 is a time difference between the sending time of the j$^{th}$ first time domain resource and sending time of a k$^{th}$ first time domain resource, the time difference #5 is a time difference between the receiving time of the j$^{th}$ second time domain resource and the sending time of the k$^{th}$ first time domain resource, the sending time of the k$^{th}$ first time domain resource is closest to the receiving time of the j$^{th}$ second time domain resource, and k is any value from 1 to N.

For example, that the terminal device determines the time difference #1 based on the sum of the timing advance TA and the time difference #3 and the time difference #2 may be that the sum of the timing advance TA and the time difference #3 is subtracted from the time difference #2, to obtain the time difference #1. In other words, the duration #1 may be the sum of the timing advance TA and the time difference #3.

Example #5

A first value, where the first value is obtained by rounding down or rounding up the value of the time difference #2.

For example, if a decimal part of the value of the time difference #2 is less than 0.5, the value of the time difference #2 is rounded down to obtain the first value; or if a decimal part of the value of the time difference #2 is greater than or equal to 0.5, the value of the time difference #2 is rounded up to obtain the first value.

In other words, the value of the time difference #2 is rounded off, to obtain the first value.

For example, if a value of a first decimal part of the value of the time difference #2 is less than 5, the decimal part of the value of the time difference #2 is deleted; or if a value of a first decimal part of the value of the time difference #2 is greater than or equal to 5, an integer part of the value of the time difference #2 plus 1 is retained. A unit of the time difference #2 may be millisecond. Optionally, reporting may be performed after rounding off in a unit of a slot.

In this example, the duration #1 is a value obtained by rounding down or rounding up the value of the time difference #2, or is a value obtained by rounding off the value of the time difference #2.

Example #6

The first information includes a quantity of each type of time domain resources in at least one type of time domain resources, where the time difference #2 may be indicated by a sum of the time difference #1 and a sum of products of quantities of types of time domain resources and lengths of the types of the time domain resources.

For example, the first information includes a first type of time domain resources, a second type of time domain resources, and a third type of time domain resources, and quantities of the three types of time domain resources are $N_1$, $N_2$, and $N_3$ respectively, where a relationship between $N_1$, $N_2$, and $N_3$, the time difference #1, and the time difference #2 meets: $T_2 = N_1 * l_1 + N_2 * l_2 + N_3 * l_3 + T_1$.

It may be understood that the time difference #2, the time difference #1, and the duration #1 may alternatively be negative values. The terminal device may further send 1-bit information to the positioning server, where the 1-bit information indicates whether the time difference #1 and/or the first duration are/is positive or negative.

For example, a value of the 1-bit information is 0 or 1. When the value is 0, it indicates that the time difference #1 and/or the first duration are/is positive; or when the value is 1, it indicates that the time difference #1 and/or the first duration are/is negative. Alternatively, when the value is 0, it indicates that the time difference #1 and/or the first duration are/is negative; or when the value is 1, it indicates that the time difference #1 and/or the first duration are/is positive.

Herein, $l_1$, $l_2$, and $l_3$ indicate lengths of the three types of time domain resources respectively, $T_1$ indicates the time difference #1, and $T_2$ indicates the time difference #2. For example, the at least one type of time domain resources may include a frame, a subframe, a slot, a mini-slot, and the like.

In this example, the duration #1 may be the sum of the products of the quantities of the types of the time domain resources and the lengths of the types of the time domain resources.

In a possible implementation, because the value range of the time difference #1 belongs to the first interval, the terminal device may report the time difference #1 in the existing manner of reporting UE(Rx-Tx).

Optionally, the method further includes:

S620: The terminal device sends the first information to the positioning server. Correspondingly, the positioning server receives the first information from the terminal device.

For the first information, refer to the description in S610. The first information may be used by the positioning server to determine the first duration.

For example, the terminal device may send the first information to the positioning server based on positioning assistance information. In other words, the terminal device sends the first information to the positioning server in a form of the positioning assistance information. Optionally, the terminal device may further directly report the first information.

It may be understood that if the first information includes a parameter configured by the network side, for example, $N_{TA}$, $N_{TA\text{-}offset}$, and $N_{TA,adj}^{common}$ in the first parameter, step S620 may not be performed, that is, the terminal device sends the time difference #1 to the positioning server. The positioning server may determine the receive-transmit time difference of the terminal device based on the time difference #1 and the configured parameter.

S630: The positioning server performs verification on a position of the terminal device based on the time difference #1 and the first information.

For example, the positioning server may determine the time difference #2 based on the time difference #1 and the first information, and determine the receive-transmit time difference of the terminal device based on the time difference #2. The positioning server may perform verification on the position of the terminal device based on the receive-transmit time difference of the terminal device. For a specific manner in which the positioning server performs verification on the position of the terminal device based on the receive-transmit time difference of the terminal device, refer to the existing related descriptions.

Optionally, before S630, the method further includes:

S640: The network device (an example of a second communication apparatus) sends a time difference #6 (an example of a sixth time difference) to the positioning server. Correspondingly, the positioning server receives the time difference #6 from the network device.

The time difference #6 is determined based on a time difference #7 and second information, and the time difference #6 belongs to a second interval.

The time difference #7 may be used to determine a receive-transmit time difference of the network device in the satellite communication scenario.

For example, the time difference #7 may be a time difference between the receiving time at which the network device receives the $j^{th}$ second time domain resource in the second time unit and sending time at which the network device sends the $i^{th}$ first time domain resource in the first time unit; or the time difference #7 indicates a time difference between the receiving time at which the network device receives the $j^{th}$ second time domain resource in the second time unit and receiving time at which the network device receives a $p^{th}$ second time domain resource in the second time unit; or the time difference #7 indicates a time difference between sending time at which the network device sends the $i^{th}$ first time domain resource in the first time unit and sending time at which the network device sends a $q^{th}$ first time domain resource in the first time unit. A value of the time difference #7 does not belong to the second interval.

A time unit used to determine the receive-transmit time difference of the network device is not limited in this application. For example, the time difference #7 may alternatively be a time difference between receiving time at which the network device receives an $m^{th}$ third time domain resource in a third time unit and sending time at which the network device sends an $n^{th}$ fourth time domain resource in a fourth time unit. The third time unit includes N third time domain resources, the fourth time unit includes N fourth time domain resources, N is a positive integer, and m and n are any values from 1 to N respectively.

The second information corresponds to duration #2 (an example of second duration), or the duration #2 may be determined based on the second information. A value of the duration #2 does not belong to the second interval.

For example, the second interval may be a reporting interval #1 corresponding to the receive-transmit time difference of the network device defined in the existing standard. Alternatively, the second interval may be less than the reporting interval #1. For example, the reporting interval #1 is -985024Tc to 985024Tc, where Tc indicates an interval between sampling points, and may be 0.509 ns. The second interval may be -985024Tc to 985024Tc or -MTc to MTc, where M<985024.

That the time difference #6 is determined based on the time difference #7 and the second information may be that the time difference #6 is a sum of the time difference #7 and the duration #2. For example, the duration #2 corresponding to the second information may be subtracted from the time difference #7, to determine the time difference #6.

The second information may be any one of the following examples.

Example #1

The second information may be a time difference #3 (an example of a third time difference), where the time difference #3 is a value of Kmac, and Kmac is a scheduling offset provided by a network side.

The time difference #3 may be a time difference between receiving time at which the network device receives the $j^{th}$ second time domain resource and sending time at which the network device sends a $j^{th}$ first time domain resource.

Optionally, the time difference #3 includes a time difference #4 and a time difference #5, the time difference #4 is a time difference between the sending time of the $j^{th}$ first time domain resource and sending time of a $k^{th}$ first time domain resource, the time difference #5 is a time difference between the receiving time of the $j^{th}$ second time domain resource and the sending time of the $k^{th}$ first time domain resource, the sending time of the $k^{th}$ first time domain resource is closest to the receiving time of the $j^{th}$ second time domain resource, and k is any value from 1 to N.

For example, that the network device determines the time difference #6 based on the time difference #3 and the time difference #7 may be that the time difference #3 is subtracted from the time difference #7, to obtain the time difference #6. In other words, the duration #2 may be the time difference #3.

Example #2

A second value, where the second value is obtained by rounding down or rounding up a value of the time difference #7.

For example, if a decimal part of the value of the time difference #7 is less than 0.5, the value of the time difference #7 is rounded down to obtain the second value; or if a decimal part of the value of the time difference #7 is greater than or equal to 0.5, the value of the time difference #7 is rounded up to obtain the second value.

In other words, the value of the time difference #7 is rounded off, to obtain the second value.

For example, if a value of a first decimal part of the value of the time difference #7 is less than 5, the decimal part of the value of the time difference #7 is deleted; or if a value of a first decimal part of the value of the time difference #7 is greater than or equal to 5, an integer part of the value of the time difference #7 plus 1 is retained. A unit of the time difference #7 may be millisecond. Optionally, reporting may be performed after rounding off in a unit of a slot.

In this example, the duration #2 is a value obtained by rounding down or rounding up the value of the time difference #7, or is a value obtained by rounding off the value of the time difference #7.

Example #3

The second information includes a quantity of each type of time domain resources in at least one type of time domain resources, where the time difference #2 may be indicated by a sum of the time difference #1 and a sum of products of quantities of types of time domain resources and lengths of the types of the time domain resources.

For example, the second information includes a first type of time domain resources, a second type of time domain resources, and a third type of time domain resources, and quantities of the three types of time domain resources are $N_1$, $N_2$, and $N_3$ respectively, where a relationship between $N_1$, $N_2$, and $N_3$, the time difference #6, and the time difference #7 meets: $T_7 = N_1 * l_1 + N_2 * l_2 + N_3 * l_3 + T_6$.

Herein, $l_1$, $l_2$, and $l_3$ indicate lengths of the three types of time domain resources respectively, $T_6$ indicates the time difference #6, and $T_7$ indicates the time difference #7. For example, the at least one type of time domain resources may include a frame, a subframe, a slot, a mini-slot, and the like.

In this example, the duration #2 may be the sum of the products of the quantities of the types of the time domain resources and the lengths of the types of the time domain resources.

In a possible implementation, because the value range of the time difference #6 belongs to the second interval, the network device may report the time difference #6 in the existing manner of reporting gNB(Rx-Tx).

Optionally, the method further includes:

S650: The network device sends the second information to the positioning server. Correspondingly, the positioning server receives the second information from the network device.

For example, the network device may send the second information to the positioning server based on positioning assistance information. In other words, the network device sends the second information to the positioning server in a form of the positioning assistance information. Optionally, the network device may further directly report the second information.

Optionally, the method further includes:

S660: The positioning server sends indication information to the terminal device. Correspondingly, the terminal device receives the indication information from the positioning server.

The indication information may indicate to send the time difference #1 and the first information.

For example, the first indication information may be carried in RRC signaling, MAC CE signaling, or downlink control information (downlink control information, DCI), or the first indication information may be carried in other downlink information. A manner of sending the first indication information is not limited in this application.

The foregoing describes in detail, with reference to FIG. 6, the communication method provided in embodiments of this application. Communication apparatuses provided in embodiments of this application are described in detail with reference to FIG. 7 to FIG. 9. It should be understood that descriptions of apparatus embodiments correspond to the descriptions of the method embodiments. Therefore, for content that is not described in detail, refer to the foregoing method embodiments. For brevity, details are not described herein again.

FIG. 7 is a diagram of a communication apparatus 700 according to an embodiment of this application. The apparatus 700 includes a transceiver unit 710, the transceiver unit 710 may be configured to implement a corresponding communication function, and the transceiver unit 710 may alternatively be referred to as a communication interface or a communication unit.

Optionally, the apparatus 700 may further include a processing unit 720, and the processing unit 720 may be configured to perform data processing.

Optionally, the apparatus 700 further includes a storage unit. The storage unit may be configured to store instructions and/or data. The processing unit 720 may read the instructions and/or the data in the storage unit, so that the apparatus implements actions of different devices in the method embodiments.

In a possible design, the apparatus 700 may be the terminal device in the foregoing embodiments, or may be a component (for example, a chip) of the terminal device. The apparatus 700 may implement the steps or the procedures performed by the terminal device in the foregoing method embodiments. The transceiver unit 710 may be configured to perform receiving and sending-related operations of the terminal device in the foregoing method embodiments, for example, receiving and sending-related operations of the terminal device in the embodiment shown in FIG. 6. The processing unit 720 may be configured to perform processing-related operations of the terminal device in the foregoing method embodiments, for example, processing-related operations of the terminal device in the embodiment shown in FIG. 6.

In a possible design, the apparatus 700 may be the network device in the foregoing embodiments, or may be a component (for example, a chip) of the network device. The apparatus 700 may implement the steps or the procedures performed by network device in the foregoing method embodiments. The transceiver unit 710 may be configured to perform receiving and sending-related operations of the network device in the foregoing method embodiments, for example, receiving and sending-related operations of the network device in the embodiment shown in FIG. 6. The processing unit 720 may be configured to perform processing-related operations of the network device in the foregoing method embodiments, for example, processing-related operations of the network device in the embodiment shown in FIG. 6.

In another possible design, the apparatus 700 may be the positioning server in the foregoing embodiments, or may be a component (for example, a chip) of the positioning server. The apparatus 700 may implement the steps or the procedures performed by the positioning server in the foregoing method embodiments. The transceiver unit 710 may be configured to perform receiving and sending-related operations of the positioning server in the foregoing method embodiments, for example, receiving and sending-related operations of the positioning server in the embodiment shown in FIG. 6. The processing unit 720 may be configured to perform processing-related operations of the positioning server in the foregoing method embodiments, for example, processing-related operations of the positioning server in the embodiment shown in FIG. 6.

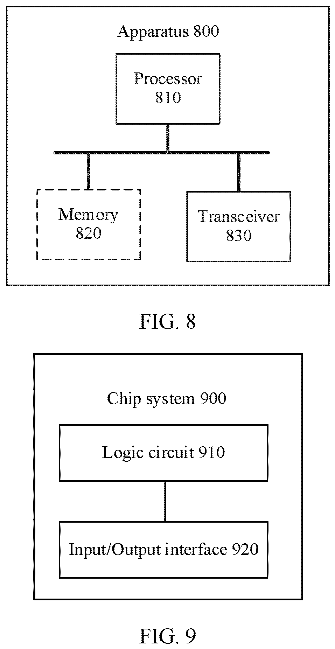

FIG. 8 is a block diagram of a communication apparatus 800 according to an embodiment of this application. The apparatus 800 includes a processor 810, and the processor 810 is coupled to a memory 820. Optionally, the apparatus 800 further includes the memory 820. The memory 820 is configured to store a computer program or instructions and/or data. The processor 810 is configured to execute the computer program or the instructions stored in the memory 820, or read the data stored in the memory 820, to perform the methods in the foregoing method embodiments.

Optionally, there are one or more processors 810.

Optionally, there are one or more memories 820.

Optionally, the memory 820 and the processor 810 are integrated together, or are disposed separately.

Optionally, as shown in FIG. 8, the apparatus 800 further includes a transceiver 830. The transceiver 830 is configured to receive and/or send a signal. For example, the processor 810 is configured to control the transceiver 830 to receive and/or send the signal.

In a solution, the apparatus 800 is configured to implement the operations performed by the network device in the foregoing method embodiments.

For example, the processor 810 is configured to execute the computer program or the instructions stored in the memory 820, to implement the related operations of the network device in the foregoing method embodiments, for example, the method performed by the network device in the embodiment shown in FIG. 6.

In another solution, the apparatus 800 is configured to implement the operations performed by the terminal device in the foregoing method embodiments.

For example, the processor 810 is configured to execute the computer program or the instructions stored in the memory 820, to implement the related operations of the terminal device in the foregoing method embodiments, for example, the method performed by the terminal device in the embodiment shown in FIG. 6.

In another solution, the apparatus 800 is configured to implement the operations performed by the positioning server in the foregoing method embodiments.

For example, the processor 810 is configured to execute the computer program or the instructions stored in the memory 820, to implement the related operations performed by the positioning server in the foregoing method embodiments, for example, implement the method performed by the positioning server in the embodiment shown in FIG. 6.

In an implementation process, steps in the foregoing methods may be implemented by using a hardware integrated logic circuit in the processor 810, or by using instructions in a form of software. The method disclosed with reference to embodiments of this application may be directly performed and completed by a hardware processor, or may be performed and completed by using a combination of hardware in the processor and a software module. The software module may be located in a mature storage medium in the field, for example, a random access memory, a flash memory, a read-only memory, a programmable read-only memory, an electrically erasable programmable memory, or a register. The storage medium is located in the memory 820, and the processor 810 reads information in the memory 820 and completes the steps in the foregoing methods in combination with hardware of the processor 810. To avoid repetition, details are not described herein again.

It should be understood that, in embodiments of this application, the processor may be one or more integrated circuits, and is configured to execute a related program, to perform the method embodiments of this application.

A processor (for example, the processor 810) may include one or more processors and is implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gate logic, transistor logic, a discrete hardware circuit, a processing circuit, other appropriate hardware or firmware, and/or another appropriate combination of hardware and software, and is configured to perform various functions described in this disclosure. The processor may be a general-purpose processor or a dedicated processor. For example, the processor 810 may be a baseband processor or a central processing unit. The baseband processor may be configured to process a communication protocol and communication data. The central processing unit may be configured to enable the apparatus to execute a software program and process data in the software program. A part of the processor may further include a non-volatile random access memory. For example, the processor may further store information of a device type.

The program in this application indicates software in a broad sense. A non-limitative example of the software includes program code, a program, a subprogram, instructions, an instruction set, code, a code segment, a software module, an application, a software application, or the like. The program may be run in a processor and/or a computer, so that the apparatus performs various functions and/or processes described in this application.

A memory (for example, the memory 820) may store data required by a processor (for example, the processor 810) when the processor executes software. The memory may be implemented by using any suitable storage technology. For example, the memory may be any available storage medium that can be accessed by the processor and/or the computer. A non-limitative example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable medium, an optical disc memory, a magnetic disk storage medium, a magnetic storage device, a flash memory, a register, a state memory, a remote mounted memory, a local or remote memory component, or any other medium capable of carrying or storing software, data, or information and accessible to the processor/computer. It should be noted that the memory described in this specification aims to include but is not limited to these memories and any memory of another appropriate type.

A memory (for example, the memory 820) and a processor (for example, the processor 810) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (for example, the integrated circuit may be disposed in UE or another network node).

FIG. 9 is a block diagram of a chip system 900 according to an embodiment of this application. The chip system 900 (or may be referred to as a processing system) includes a logic circuit 910 and an input/output interface (input/output interface) 920.

The logic circuit 910 may be a processing circuit in the chip system 900. The logic circuit 910 may be coupled to a storage unit, and invoke instructions in the storage unit, so that the chip system 900 can implement the methods and functions in embodiments of this application. The input/output interface 920 may be an input/output circuit in the chip system 900, and outputs information processed by the chip system 900, or inputs to-be-processed data or signaling information to the chip system 900 for processing.

In a solution, the chip system 900 is configured to implement the operations performed by the network device in the foregoing method embodiments.

For example, the logic circuit 910 is configured to implement processing-related operations performed by the network device in the foregoing method embodiments, for example, processing-related operations performed by the network device in the embodiment shown in FIG. 6. The input/output interface 920 is configured to implement sending and/or receiving-related operations performed by the network device in the foregoing method embodiments, for example, sending and/or receiving-related operations performed by the network device in the embodiment shown in FIG. 6.

In another solution, the chip system 900 is configured to implement the operations performed by the terminal device in the foregoing method embodiments.

For example, the logic circuit 910 is configured to implement processing-related operations performed by the terminal device in the foregoing method embodiments, for example, processing-related operations performed by the terminal device in the embodiment shown in FIG. 6. The input/output interface 920 is configured to implement sending and/or receiving-related operations performed by the terminal device in the foregoing method embodiments, for example, sending and/or receiving-related operations performed by the terminal device in the embodiment shown in FIG. 6.

In another solution, the chip system 900 is configured to implement the operations performed by the positioning server in the foregoing method embodiments.

For example, the logic circuit 910 is configured to implement processing-related operations performed by the positioning server in the foregoing method embodiments, for example, processing-related operations performed by the positioning server in the embodiment shown in FIG. 6. The input/output interface 920 is configured to implement sending and/or receiving-related operations performed by the positioning server in the foregoing method embodiments, for example, sending and/or receiving-related operations performed by the positioning server in the embodiment shown in FIG. 6.

An embodiment of this application further provides a computer-readable storage medium. The computer-readable storage medium stores computer instructions used to implement the method performed by the communication apparatus (for example, the network device, the terminal device, or the positioning server) in the foregoing method embodiments.

An embodiment of this application further provides a computer program product including instructions. When the instructions are executed by a computer, the computer is enabled to implement the method performed by the communication apparatus (for example, the network device, the terminal device, or the positioning server) in the foregoing method embodiments.

An embodiment of this application further provides a communication system. The communication system includes one or more of the network device, the terminal device, or the positioning server in the foregoing embodiments.

For explanations and beneficial effect of related content in any one of the apparatuses provided above, refer to the corresponding method embodiments provided above. Details are not described herein again.

In the several embodiments provided in this application, it should be understood that the disclosed apparatus and method may be implemented in other manners. For example, the foregoing apparatus embodiments are only examples. For example, division into the foregoing units is only logical function division, and may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that units and algorithm steps in the examples described with reference to embodiments disclosed in this specification can be implemented by electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

When software is used to implement embodiments, all or some embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A positioning method, comprising:

sending, by a first communication apparatus, a first time difference to a positioning server, wherein the first time difference is determined based on a second time difference and first information, and a value range of the first time difference is a first interval, and

the second time difference indicates a time difference between receiving time at which the first communication apparatus receives an $i^{th}$ first time domain resource in a first time unit and sending time at which the first communication apparatus sends a $j^{th}$ second time domain resource in a second time unit, and the first information corresponds to first duration.

2. The method according to claim 1, wherein the first information comprises any one of the following:

a first parameter, wherein the first parameter is used to determine a timing advance TA of the first communication apparatus;

an identifier of a timing advance group TAG to which the first communication apparatus belongs, wherein the identifier of the TAG corresponds to a first timing advance TA;

a scheduling offset $K_{offset}$ of the first communication apparatus, wherein the scheduling offset $K_{offset}$ is used to adjust the sending time of the second time domain resource; and

a sum of the timing advance TA of the first communication apparatus and a third time difference, wherein the third time difference is a time difference between receiving time at which a second communication apparatus receives the $j^{th}$ second time domain resource and sending time at which the second communication apparatus sends a $j^{th}$ first time domain resource.

3. The method according to claim 2, wherein the third time difference comprises a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

4. The method according to claim 1, wherein the first information comprises any one of the following:

a first value, wherein the first value is obtained by rounding down or rounding up the second time difference; and

a quantity of each type of time domain resources in at least one type of time domain resources, wherein a sum of the first time difference and a sum of products of quantities of types of time domain resources and lengths of the types of the time domain resources is the second time difference.

5. The method according to claim 4, wherein the method further comprises:
sending, by the first communication apparatus, the first information to the positioning server.

6. The method according to any one of claims 1 to 5, wherein the method further comprises:

sending, by the first communication apparatus, the $j^{th}$ second time domain resource to the second communication apparatus, wherein the $j^{th}$ second time domain resource is used by the second communication apparatus to determine a sixth time difference, the sixth time difference is determined based on a seventh time difference and second information, and a value range of the sixth time difference is a second interval, and

the seventh time difference indicates a time difference between the receiving time at which the second communication apparatus receives the $j^{th}$ second time domain resource and sending time at which the second communication apparatus sends the $i^{th}$ first time domain resource, and the second information corresponds to second duration.

7. The method according to claim 6, wherein the second information comprises any one of the following:

a quantity $N_1$ of a first type of time domain resources, wherein a value of $N_1$ is determined based on a third time difference and a length of the first type of time domain resource, and the third time difference is a time difference between receiving time at which a second communication apparatus receives the $j^{th}$ second time domain resource and sending time at which the second communication apparatus sends a $j^{th}$ first time domain resource;

a second value, wherein the second value is obtained by rounding down or rounding up the seventh time difference; and

a quantity of each type of time domain resources in at least one type of time domain resources, wherein a sum of the first time difference and a sum of products of quantities of types of time domain resources and lengths of the types of the time domain resources is the second time difference.

8. The method according to claim 7, wherein the third time difference comprises a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

9. The method according to any one of claims 1 to 8, wherein the method further comprises:
receiving, by the first communication apparatus, indication information from the positioning server, wherein the indication information indicates to send the first time difference.

10. A positioning method, comprising:

receiving, by a second communication apparatus, a first time difference from a first communication apparatus, wherein the first time difference is determined based on a second time difference and first information, and a value range of the first time difference is a first interval; and

sending, by the second communication apparatus, the first time difference to a positioning server, wherein the second time difference indicates a time difference between receiving time at which the first communication apparatus receives an $i^{th}$ first time domain resource in a first time unit and sending time at which the first communication apparatus sends a $j^{th}$ second time domain resource in a second time unit, and the first information corresponds to first duration.

11. The method according to claim 10, wherein the first information comprises any one of the following:

a first parameter, wherein the first parameter is used to determine a timing advance TA of the first communication apparatus;

an identifier of a timing advance group TAG to which the first communication apparatus belongs, wherein the identifier of the TAG corresponds to a first timing advance TA;

a scheduling offset $K_{offset}$ of the first communication apparatus, wherein the scheduling offset $K_{offset}$ is used to adjust the sending time of the second time domain resource; and

a sum of the timing advance TA of the first communication apparatus and a third time difference, wherein the third time difference is a time difference between receiving time at which the second communication apparatus receives the $j^{th}$ second time domain resource and sending time at which the second communication apparatus sends a $j^{th}$ first time domain resource.

12. The method according to claim 11, wherein the third time difference comprises a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

13. The method according to claim 10, wherein the first information comprises any one of the following:

a first value, wherein the first value is obtained by rounding down or rounding up the second time difference; and

a quantity of each type of time domain resources in at least one type of time domain resources, wherein a sum of the first time difference and a sum of products of quantities of types of time domain resources and lengths of the types of the time domain resources is the second time difference.

14. The method according to claim 10, wherein the method further comprises:

receiving, by the second communication apparatus, the first information from the first communication apparatus; and

sending, by the second communication apparatus, the first information to the positioning server.

15. The method according to any one of claims 10 to 14, wherein the method further comprises:

sending, by the second communication apparatus, a sixth time difference to the positioning server, wherein the sixth time difference is determined based on a seventh time difference and second information, and a value range of the sixth time difference is a second interval, and

the seventh time difference indicates a time difference between the receiving time at which the second communication apparatus receives the $j^{th}$ second time domain resource and sending time at which the second communication apparatus sends the $i^{th}$ first time domain resource, and the second information corresponds to second duration.

16. The method according to claim 15, wherein the second information comprises any one of the following:

a quantity $N_1$ of a first type of time domain resources, wherein a value of $N_1$ is determined based on a third time difference and a length of the first type of time domain resource, and the third time difference is a time difference between receiving time at which the second communication apparatus receives the $j^{th}$ second time domain resource and sending time at which the second communication apparatus sends a $j^{th}$ first time domain resource;

a second value, wherein the second value is obtained by rounding down or rounding up the seventh time difference; and

a quantity of each type of time domain resources in at least one type of time domain resources, wherein a sum of the sixth time difference and a sum of products of quantities of types of time domain resources and lengths of the types of the time domain resources is the seventh time difference.

17. The method according to claim 16, wherein the third time difference comprises a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

18. The method according to any one of claims 15 to 17, wherein the method further comprises:
sending, by the second communication apparatus, the second information to the positioning server.

19. A positioning method, comprising:

receiving, by a positioning server, a first time difference, wherein the first time difference is determined based on a second time difference and first information, a value range of the first time difference is a first interval, the second time difference indicates a time difference between receiving time at which a first communication apparatus receives an $i^{th}$ first time domain resource in a first time unit and sending time at which the first communication apparatus sends a $j^{th}$ second time domain resource in a second time unit, and the first information corresponds to first duration; and

performing, by the positioning server, verification on a position of the first communication apparatus based on the first time difference and the first duration.

20. The method according to claim 19, wherein the first information comprises any one of the following:

a first parameter, wherein the first parameter is used to determine a timing advance TA of the first communication apparatus;

an identifier of a timing advance group TAG to which the first communication apparatus belongs, wherein the identifier of the TAG corresponds to a first timing advance TA;

a scheduling offset $K_{offset}$ of the first communication apparatus, wherein the scheduling offset $K_{offset}$ is used to adjust the sending time of the second time domain resource; and

a sum of the timing advance TA of the first communication apparatus and a third time difference, wherein the third time difference is a time difference between receiving time at which a second communication apparatus receives the $j^{th}$ second time domain resource and sending time at which the second communication apparatus sends a $j^{th}$ first time domain resource.

21. The method according to claim 20, wherein the third time difference comprises a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

22. The method according to claim 19, wherein the first information comprises any one of the following:

   a first value, wherein the first value is obtained by rounding down or rounding up the second time difference; and
   a quantity of each type of time domain resources in at least one type of time domain resources, wherein a sum of the first time difference and a sum of products of quantities of types of time domain resources and lengths of the types of the time domain resources is the second time difference.

23. The method according to any one of claims 19 to 22, wherein before performing, by the positioning server, verification on the position of the first communication apparatus based on the first time difference and the first information, the method further comprises:
   receiving, by the positioning server, the first information from the first communication apparatus.

24. The method according to any one of claims 19 to 23, wherein the method further comprises:

   receiving, by the positioning server, a sixth time difference from the second communication apparatus, wherein the sixth time difference is determined based on a seventh time difference and second information, and a value range of the sixth time difference is a second interval, and
   the seventh time difference indicates a time difference between the receiving time at which the second communication apparatus receives the $j^{th}$ second time domain resource and sending time at which the second communication apparatus sends the $i^{th}$ first time domain resource, and the second information corresponds to second duration.

25. The method according to claim 24, wherein the second information is any one of the following:

   a quantity $N_1$ of a first type of time domain resources, wherein a value of $N_1$ is determined based on a third time difference and a length of the first type of time domain resource, and the third time difference is a time difference between receiving time at which the second communication apparatus receives the $j^{th}$ second time domain resource and sending time at which the second communication apparatus sends a $j^{th}$ first time domain resource;
   a second value, wherein the second value is obtained by rounding down or rounding up the seventh time difference; and
   a quantity of each type of time domain resources in at least one type of time domain resources, wherein a sum of the sixth time difference and a sum of products of quantities of types of time domain resources and lengths of the types of the time domain resources is the seventh time difference.

26. The method according to claim 25, wherein the third time difference comprises a fourth time difference and a fifth time difference, the fourth time difference is a time difference between the sending time of the $j^{th}$ first time domain resource and sending time of a $k^{th}$ first time domain resource, the fifth time difference is a time difference between the receiving time of the $j^{th}$ second time domain resource and the sending time of the $k^{th}$ first time domain resource, and the sending time of the $k^{th}$ first time domain resource is closest to the receiving time of the $j^{th}$ second time domain resource.

27. The method according to any one of claims 24 to 26, wherein before performing, by the positioning server, verification on the position of the first communication apparatus based on the first time difference and the first information, the method further comprises:
   receiving, by the positioning server, the second information from the second communication apparatus.

28. The method according to any one of claims 19 to 27, wherein before receiving, by the positioning server, the first time difference, the method further comprises:
   sending, by the positioning server, indication information to the first communication apparatus, wherein the indication information indicates to send the first time difference.

29. A communication apparatus, comprising at least one processor, wherein the at least one processor is configured to execute a computer program stored in a memory, so that the apparatus performs the method according to any one of claims 1 to 9, the method according to any one of claims 10 to 18, or the method according to any one of claims 19 to 28.

30. A computer-readable storage medium, wherein the computer-readable storage medium stores a computer program, and when the computer program runs, an apparatus is enabled to perform the method according to any one of claims 1 to 9, the method according to any one of claims 10 to 18, or the method according to any one of claims 19 to 28.

FIG. 1

FIG. 2

EP 4 661 438 A1

FIG. 3

EP 4 661 438 A1

gNB DL

| PRS<br>Subframe i | | | | | | | Subframe x |

gNB(Rx-Tx)

gNB UL

| Subframe i | | | | | | | SRS<br>Subframe x |

UE DL

| PRS<br>Subframe i | | | | | | | |

UE(Rx-Tx)

UE UL

| Subframe i | Subframe j | | | | | | SRS<br>Subframe x |

FIG. 4

(a)

(b)

FIG. 5

600

| Terminal device | Network device | Positioning server |

S610: Time difference #1

S620: First information

S630: Perform verification on a position of the terminal device based on the time difference #1 and the first information

S640: Time difference #6

S650: Second information

S660: Indication information

FIG. 6

Communication apparatus 700

Transceiver unit 710

Processing unit 720

FIG. 7

Apparatus 800

Processor
810

Memory
820

Transceiver
830

FIG. 8

Chip system 900

Logic circuit 910

Input/Output interface 920

FIG. 9

## INTERNATIONAL SEARCH REPORT

| International application No. |
|---|
| **PCT/CN2024/077095** |

### A. CLASSIFICATION OF SUBJECT MATTER

H04W 4/029(2018.01)i

According to International Patent Classification (IPC) or to both national classification and IPC

### B. FIELDS SEARCHED

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

CNTXT, DWPI, ENTXTC, CNKI, CJFD, 3GPP: 发送, 接收, 时间差, 上报, 区间, 范围, 定位, 位置, 校验, 验证, 卫星, 非地面, 定时提前, 偏移, 类型, transmit, receive, Rx, Tx, time difference, report, range, position, location, check, verify, satellite, non-terrestrial, timing advance, offset, type, TA, TAG, LMF, NTN

### C. DOCUMENTS CONSIDERED TO BE RELEVANT

| Category* | Citation of document, with indication, where appropriate, of the relevant passages | Relevant to claim No. |
|---|---|---|
| X | CN 115175235 A (HUAWEI TECHNOLOGIES CO., LTD.) 11 October 2022 (2022-10-11) abstract, description, paragraphs [0006]-[0032] and [0075]-[0086], and figures 1-5 | 1-2, 4-5, 9-11, 13-14, 19-20, 22-23, 28-30 |
| A | CN 115175235 A (HUAWEI TECHNOLOGIES CO., LTD.) 11 October 2022 (2022-10-11) abstract, description, paragraphs [0006]-[0032] and [0075]-[0086], and figures 1-5 | 3, 6-8, 12, 15-18, 21, 24-27 |
| A | QUALCOMM INC. "Network verification of UE location in NTN" *3GPP TSG RAN Meeting #95-e, RP-220174*, 23 March 2022 (2022-03-23), entire document | 1-30 |
| A | US 2022408389 A1 (HUAWEI TECHNOLOGIES CO., LTD.) 22 December 2022 (2022-12-22) entire document | 1-30 |
| A | US 2021337531 A1 (QUALCOMM INC.) 28 October 2021 (2021-10-28) entire document | 1-30 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 May 2024** | **20 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | | | | International application No. | |
| --- | --- | --- | --- | --- | --- | --- |
| Information on patent family members | | | | | **PCT/CN2024/077095** | |

| Patent document cited in search report | | | Publication date (day/month/year) | Patent family member(s) | | | Publication date (day/month/year) |
| --- | --- | --- | --- | --- | --- | --- | --- |
| CN | 115175235 | A | 11 October 2022 | WO | 2022206688 | A1 | 06 October 2022 |
| US | 2022408389 | A1 | 22 December 2022 | JP | 2023514312 | A | 05 April 2023 |
| | | | | WO | 2021164579 | A1 | 26 August 2021 |
| | | | | EP | 4099602 | A1 | 07 December 2022 |
| | | | | CN | 113347697 | A | 03 September 2021 |
| US | 2021337531 | A1 | 28 October 2021 | KR | 20230005126 | A | 09 January 2023 |
| | | | | BR | 112022020906 | A2 | 29 November 2022 |
| | | | | EP | 4140065 | A1 | 01 March 2023 |
| | | | | JP | 2023522865 | A | 01 June 2023 |
| | | | | TW | 202147891 | A | 16 December 2021 |
| | | | | WO | 2021216388 | A1 | 28 October 2021 |
| | | | | CN | 115443620 | A | 06 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310165627